# EUROPÄISCHE PATENTSCHRIFT

(11) **EP 0 615 985 B1**
(45) Veröffentlichungstag und Bekanntmachung des Hinweises auf die Patenterteilung: **06.05.1999**
(21) Anmeldenummer: 94101591.9
(22) Anmeldetag: 03.02.1994
(51) Int. Cl.: C08G 8/08

(54) **Bindemittelsystem**
Binder system
Système de liants

(30) Priorität: 16.03.1993 DE 4308163
(43) Veröffentlichungstag der Anmeldung: 21.09.1994
(73) Patentinhaber: Bakelite AG, 58642 Iserlohn-Letmathe (DE)
(72) Erfinder: Coglio, Alberto, Dr., I-21040 Castronno (Varese) (IT); Scattolin, Paolo, I-21058 Solbiate Olona (Varese) (IT); Meier, Bert, Dr., D-58708 Menden (DE)

(56) Entgegenhaltungen:
- WO-A-89/01835
- US-A- 4 465 800
- DATABASE WPI Week 8311, 1983 Derwent Publications Ltd., London, GB; AN 83-26928K & SU-A-925 968 (POLYMER CONS MAT) 7. Mai 1982
- CHEMICAL ABSTRACTS, vol. 89, no. 18, 30. Oktober 1978, Columbus, Ohio, US; abstract no. 147708h, Seite 35 ; & SU-A-619 495 (REGIONAL SCIENTIFIC RESEARCH INSTITUTE OF DESING) 15. August 1978
- DATABASE WPI Week 8335, 1983 Derwent Publications Ltd., London, GB; AN 83-751691 & SU-A-968 334 (SOYUZTERMNEFT ET ALL.) 23. Oktober 1982
- CHEMICAL PATENTS INDEX, BASIC ABSTRACTS JOURNAL Week 8614, 1986 Derwent Publications Ltd., London, GB; AN 86-091100 & JP-A-61 037 346 (ARAKAWA K.K.) 22. Februar 1986

## Beschreibung

Die Erfindung betrifft die Verwendung von Bindemittelsystemen auf der Basis eines Resols und eines Salzes einer Verbindung, die mit einer Carbonylgruppe reagieren kann, als Härter.

Es ist bekannt, daß Resole mit Hilfe von Säuren gehärtet werden können. Jedoch werden durch die Abmischung der Resole mit sauren Härtern Mischungen erhalten, deren Lagerstabilität sehr gering ist. Die Mischungen härten auch bei Raumtemperatur durch. Auch bei Einsatz von Schwermetallsulfonaten oder Addukten von sauren Salzen mit Glykolen werden nur Lagerstabilitäten der entsprechenden Bindemittelsysteme von mehreren Wochen erreicht.

Es ist daher Aufgabe der Erfindung, ein sicheres Bindemittelsystem auf der Basis eines Resols bereitzustellen, das eine mehrmonatige Lagerstabilität bei Raumtemperatur besitzt, das aber bei höherer Temperatur dennoch schnell durchhärtet, bei dem zudem die Anspringtemperatur gesenkt werden kann, so daß sich ein derartiges Bindemittelsystem zur Herstellung von Massen für das Reaction-Injection-Molding-Verfahren, von Prepregs oder von Reibmaterialien eignet.

Die Lösung der Aufgabe erfolgt durch die Verwendung eines Bindemittelsystems bestehend aus einem Resol mit einem freien Aldehydgehalt von weniger als 1% und 0,5-10 Gew.%, bezogen auf das Resol, eines Salzes einer Verbindung, die mit einer Carbonylgruppe reagiert, zur Herstellung von Massen für das Reaction-Injection-Molding-Verfahren sowie zur Herstellung von Prepregs und von Reibmaterialien gemäß der Ansprüche 1 bis 3.

Aus US-A-4 465 800 ist bekannt, daß Lösungen von Resolen, die als Tinten für das Ink-Jet-Verfahren eingesetzt werden, eine verbesserte Lagerstabilität haben, wenn sie geringe Mengen von Salzen aminischer Verbindungen, wie z.B. des Hydroxylamins enthalten.

Aus WO-A-89 01835 ist bekannt, Gießereisandmischungen mit Phenol-Resolen als Bindemittel herzustellen, denen Salze, u.a. Salze des Hydroxylamins beigemischt werden. Die Salze verbessern die Festigkeiten der mit diesen Mischungen hergestellten gehärteten Produkte. Die Härtung erfolgt in einem Temperaturbereich von 200-300°C und ist demnach als eine an sich bekannte Wärmehärtung der eingesetzten Resole anzusehen.

Im Gegensatz dazu wurde gefunden, daß Resole mit einem niedrigen freien Aldehydgehalt mit Salzen von Verbindungen, die mit Aldehyd reagieren, nicht nur lagerstabile Mischungen bilden, sondern daß bei Erwärmen der Mischungen über eine Anspringtemperatur eine sehr schnelle Aushärtung des Resols erfolgt.

Es ist dabei von Vorteil, daß die Aushärtung innerhalb kürzester Zeit erfolgt, obwohl die Lagerstabilität mehrere Monate beträgt. Es ist weiterhin überraschend und vorteilhaft, daß die Aushärtungszeit durch die Menge des eingesetzten Härters ohne Zusatz eines weiteren Katalysators nahezu beliebig variiert werden kann, und daß die Anspringtemperatur bis in einen Temperaturbereich von 90 bis 100 °C gesenkt werden kann. Als weitere Vorteile gegenüber den bekannten Schwermetallsalzen als latenten Härtern erfolgen keine Verfärbungen der gehärteten Produkte und bei der thermischen Entsorgung werden keine Schwermetalle freigesetzt.

Als Resole in den erfindungsgemäß verwendeten Bindemittelsystemen können alle alkalischen Kondensationsprodukte aus phenolischen Verbindungen und Aldehyden oder Ketonen eingesetzt werden, insbesondere Kondensationsprodukte aus Phenol, Kresolen, Xylolen oder Resorcin mit Formaldehyd.

Auch die Wahl des Kondensationsmittels ist beliebig. So können Alkalihydroxide, Erdalkalihydroxide oder Ammoniak oder Amine als Kondensationsmittel in jeder an sich bekannten Menge verwendet werden.

Nach der Herstellung werden die Resole in an sich bekannter Weise teilweise oder vollständig neutralisiert. In den erfindungsgemäß verwendeten Bindemittelsystemen können auch stark alkalische Resole eingesetzt werden, wobei grundsätzlich die folgende Überlegung gilt: Je höher der Alkaligehalt des Resols ist, umso mehr erfindungsgemäßer Härter muß eingesetzt werden. Andererseits ermöglicht es ein alkalisches Resol, auch mit relativ hohem Formaldehydgehalt (1 %) eine ausreichende Lagerstabilität zu erzielen.

Als Resole können auch Harnstoff-Formaldehyd- und Melamin-Formaldehyd-Kondensationsprodukte sowie mit Harnstoff modifizierte Phenolresole eingesetzt werden.

Alle Resole sollen einen möglichst niedrigen Gehalt an freiem Formaldehyd besitzen. Ideal wäre ein Gehalt an freiem Formaldehyd von 0 %. Einsetzbar sind Resole mit einem freien Formaldehydgehalt bis 1 %, bevorzugt 0,05 bis 0,1 %.

Die latenten Härter in den erfindungsgemäß eingesetzten Bindemittelgemischen sind Salze einer Verbindung, die mit einer Carbonylgruppe reagieren kann, insbesondere einer stickstoffhaltigen Verbindung, die mit einer Carbonylgruppe reagieren kann.

Beispiele für derartige Verbindungen sind Hydroxylamin, O-Alkylhydroxylamine, Hydrazin und Hydrazinderivate, insbesondere Phenylhydrazin. Diese Verbindungen bilden mit Säuren stabile Salze. Bevorzugt eingesetzt werden Salze dieser Verbindungen mit starken Säuren, wie mit Mineralsäuren (HCl, H₂SO₄, H₃PO₄), aber auch mit starken organischen Säuren, wie z. B. Oxal-, Chloressig- oder Sufonsäuren.

Bevorzugte Härter sind Salze des Hydroxylamins mit einer starken Säure, insbesondere Hydroxylammonium-chlorid oder -sulfat.

Diese Härter werden in einer Menge von 0,5 bis 10 Gew.-%, bezogen auf das Resol, eingesetzt. Hierzu werden sie als wäßrige oder wäßrig alkoholische Lösung dem Resol zugegeben oder als Festsubstanzen mit Trokkenresol vermischt oder in wäßriger Resollösung gelöst.

Mit steigender Menge des eingesetzten Härters wird die Aushärtungszeit des erfindungsgemäßen Bindemittels und die Anspringtemperatur für die Härtung reduziert.

Die erfindungsgemäßen Bindemittelsysteme können mit an sich bekannten Füll- und Zusatzstoffen zur Herstellung von Formmassen verarbeitet werden. Aufgrund der sehr kurzen erzielbaren Härtungszeiten eignen sie sich besonders als Bindemittel für Massen für das Reaction-Injection-Molding-Verfahren.

Lösungen des erfindungsgemäßen Bindemittelsystems eignen sich auch zur Imprägnierung von Geweben und Vliesen. Nach dem Trocknen der Lösung läßt sich durch kurzzeitiges Erwärmen des imprägnierten Gewebes oder Vlieses (z. B. 10 sec. auf 90 bis 100 °C) das aufgebrachte Resol in einen klebfreien B-Zustand umwandeln. Man erhält dadurch klebfreie, lagerstabile Prepregs.

### BEISPIELE

### Beispiel 1

Phenol und Formaldehyd werden unter katalytischen Einfluß von Natronlauge in einem molaren Verhältnis von Phenol zu Formaldehyd von 1 : 2 miteinander kondensiert.

Das erhaltene Kondensationsprodukt wird mit Schwefelsäure neutralisiert. Zur Verminderung des Formaldehydgehaltes wird das Wasser abdestilliert. Es verbleibt ein Festresol mit einem freien Formaldehydgehalt von 0,1 %.

### Beispiel 2

100 g des Harzes aus Beispiel 1 werden mit einer Lösung von 5 g Hydroxylamin-hydrochlorid in 40 ml Wasser vermischt.

Die Lösung ist bei Raumtemperatur mehr als 3 Monate lagerstabil. Glasgewebe wird mit der Lösung imprägniert, getrocknet und danach 10 sec. auf 95 °C erwärmt.

Erhalten wird klebfreies Prepreg.

Nach einer Lagerzeit von drei Monaten bei Raumtemperatur werden 8 Lagen dieser Prepregs bei 120 °C 1 min. lang miteinander verpreßt. Erhalten wird ein Laminat mit ausgezeichneter interlaminarer Scherfestigkeit.

### Beispiel 3

100 g des Harzes aus Beispiel 1 werden mit 4 g Hydroxylammonium-sulfat vermischt.

Das erhaltende Bindemittelsystem ist mehr als drei Monate lagerstabil. Beim Erhitzen auf 100 °C wird eine Härtung innerhalb von 10 min. beim Erhitzen auf 120 °C innerhalb von 50 sec. erreicht.

## Patentansprüche

1. Verwendung eines Bindemittelsystems bestehend aus einem Resol mit einem freien Aldehydgehalt von weniger als 1% und 0,5-10 Gew.-%, bezogen auf das Resol, eines Salzes einer Verbindung, die mit einer Carbonylgruppe reagieren kann, zur Herstellung von Massen für Reaction-Injection-Molding-Verfahren.

2. Verwendung eines Bindemittelsystems bestehend aus einem Resol mit einem freien Aldehydgehalt von weniger als 1% und 0,5-10 Gew.-%, bezogen auf das Resol, eines Salzes einer Verbindung, die mit einer Carbonylgruppe reagieren kann, zur Herstellung von Prepregs.

3. Verwendung eines Bindemittelsystems bestehend aus einem Resol mit einem freien Aldehydgehalt von weniger als 1% und 0,5-10 Gew.-%, bezogen auf das Resol, eines Salzes einer Verbindung, die mit einer Carbonylgruppe reagieren kann, zur Herstellung von Reibmaterialien.

## Claims

1. Use of a binder system based on a resol with a free aldehyde content of less than 1% and 0.5 to 10 % by weigth, relative to the resol, of a salt of a compound, which can react with a carbonyl group, for producing compounds for reaction-injection-moulding processes.

2. Use of a binder system based on a resol with a free aldehyde content of less than 1% and 0.5 to 10 % by weigth, relative to the resol, of a salt of a compound, which can react with a carbonyl group, for producing prepregs.

3. Use of a binder system based on a resol with a free aldehyde content of less than 1% and 0.5 to 10 % by weigth, relative to the resol, of a salt of a compound, which can react with a carbonyl group, for producing friction materials.

## Revendications

1. Utilisation du système de liants à base d'un résol avec une teneur en aldéhyde libre inférieure à 1% et de 0,5 à 10 % en poids, rapportés au résol, d'un sel d'un composé qui peut réagir avec un groupe carbonyle, pour la préparation de pâtes pour le procédé de moulage par injection et réaction.

2. Utilisation du système de liants à base d'un résol avec une teneur en aldéhyde libre inférieure à 1% et de 0,5 à 10 % en poids, rapportés au résol, d'un sel d'un composé qui peut réagir avec un groupe carbonyle, pour la préparation de substances de préimprégnation.

3. Utilisation du système de liants à base d'un résol avec une teneur en aldéhyde libre inférieure à 1% et de 0,5 à 10 % en poids, rapportés au résol, d'un sel d'un composé qui peut réagir avec un groupe carbonyle, pour la préparation de matières de friction.
